(19) **Europäisches Patentamt / European Patent Office / Office européen des brevets**

(11) **EP 2 748 093 B1**

(12) **EUROPEAN PATENT SPECIFICATION**

(45) Date of publication and mention
of the grant of the patent:
**25.03.2015 Bulletin 2015/13**

(21) Application number: **12816131.2**

(22) Date of filing: **05.12.2012**

(51) Int Cl.:
**B66B 1/34** *(2006.01)*      **G01C 21/16** *(2006.01)*

(86) International application number:
**PCT/IB2012/056967**

(87) International publication number:
**WO 2013/084154 (13.06.2013 Gazette 2013/24)**

(54) **METHOD AND APPARATUS FOR ELEVATOR MOTION DETECTION**

VERFAHREN UND VORRICHTUNG FÜR AUFZUGBEWEGUNGSERMITTLUNG

PROCÉDÉ ET DISPOSITIF POUR DÉTÉCTION DU MOUVEMENT D'ASCENSEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.12.2011 US 201161567714 P**

(43) Date of publication of application:
**02.07.2014 Bulletin 2014/27**

(73) Proprietor: **Koninklijke Philips N.V.
5656 AE Eindhoven (NL)**

(72) Inventors:
• **VAN DEN HEUVEL, Teun
NL-5656 AE Eindhoven (NL)**
• **FOKKENROOD, Steven, Antonie, Willem
NL-5656 AE Eindhoven (NL)**

(74) Representative: **Steffen, Thomas
Philips
Intellectual Property & Standards
P.O. Box 220
5600 AE Eindhoven (NL)**

(56) References cited:
**EP-A2- 1 626 025      WO-A1-2009/013114
WO-A2-2006/035101**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD OF THE INVENTION

The invention relates to a method and apparatus that can provide an indication of the location of a user of the apparatus, and in particular relates to a method and apparatus that can detect motion of the user in an elevator and thus provide an indication of the elevation of the user.

### BACKGROUND TO THE INVENTION

Satellite positioning systems, such as GPS, provide an indication of the location of the user using signals received from a number of satellites. Although these types of systems work well in outdoor environments, they do not work very well, or at all, in indoor environments since it can be difficult to receive the signals from the satellites.

Therefore, attempts have been made to provide indoor tracking and navigation systems. Some systems use motion detection systems (for example requiring infrastructure to be installed in the indoor environment and/or through the use of a user-worn device that contains motion sensors), that can optionally make use of maps of the indoor environment or other context information.

Accelerometers can be used in these user-worn devices that measure acceleration, including gravitational fields, to which they are subjected. Tri-axial (3D) accelerometers have this capability irrespective of their own orientation, and can provide a relative direction of the acceleration along with the magnitude of the acceleration. This makes them useful for a wide variety of motion related applications.

One important aspect of indoor tracking and navigation systems is determining which floor of the building the user is on. However, there are currently no reliable solutions for determining the floor that a user is on based on accelerometer measurements.

Therefore, there is a need for an improved method and apparatus for detecting the motion of the user in an elevator and for determining the elevation of the user from that motion, for example in terms of the floor or level of a building that the user is on.

WO2009013114 A1 shows a method of detecting the speed of an elevator car.

### SUMMARY OF THE INVENTION

It has been found that elevators of different types exhibit very typical motion patterns that can be observed using just an accelerometer. A typical journey in an elevator starts with an upward or downward acceleration from a static situation (i.e. zero acceleration apart from gravity), followed by a (usually) steady upward or downward motion, and then a deceleration until the elevator returns to a static situation. The amount of upward or downward displacement of the elevator relates to the total of acceleration, steady motion and deceleration. Moreover, the direction of an elevator displacement (i.e. either up or down) can be sensed by an accelerometer since the elevator acceleration will either add to or subtract from the gravity signal (which is always in the upward direction).

Therefore, according to a first aspect of the invention, there is provided a method for detecting the motion of a user or object in an elevator, the method comprising measuring the acceleration experienced by the user or object to obtain a series of acceleration measurements; processing the series of acceleration measurements to identify a peak and a trough therein that are associated with the start and end of an elevator motion; identifying a section of the acceleration measurements corresponding to the elevator motion from the identified peak and trough; and determining an indication of the change in elevation of the user or object during the elevator motion from the identified section of the acceleration measurements.

In some embodiments, the method further comprising the steps of determining a noise level signal from the series of acceleration measurements, the noise level signal indicating the level of noise in each of the acceleration measurements; and comparing the noise level signal to a noise threshold; and the step of processing the acceleration measurements comprises processing only those acceleration measurements where the corresponding part of the noise level signal is less than the noise threshold.

In other embodiments, the step of processing comprises comparing the amplitude of each acceleration measurement to a peak threshold and a trough threshold, the peak threshold being higher than the trough threshold; identifying a candidate peak in the acceleration measurements as a group of consecutive acceleration measurements whose amplitudes exceed the peak threshold and identifying a candidate trough in the acceleration measurements as a group of consecutive acceleration measurements whose amplitudes are below the trough threshold.

In those embodiments, the step of processing preferably further comprises discarding any identified candidate peak or identified candidate trough where the duration of the respective group of acceleration measurements is less than a minimum time threshold.

In further embodiments, the method further comprises the steps of determining a noise level signal from the series of acceleration measurements, the noise level signal indicating the level of noise in each of the acceleration measurements; and comparing the noise level signal to a noise threshold; and wherein the step of processing the acceleration measurements further comprises discarding any identified candidate peak and identified candidate trough where the corresponding part of the noise level signal exceeds the noise threshold.

In yet further embodiments, the step of processing further comprises evaluating the candidate peaks and candidate troughs to identify an elevator motion, with an elevator motion being identified by a candidate peak followed by a candidate trough or a candidate trough followed by a candidate peak.

Alternatively, the step of processing further comprises evaluating the candidate peaks and candidate troughs to identify an elevator motion, with an elevator motion being identified as a candidate peak followed by a candidate trough within a predetermined time period or as a candidate trough followed by a candidate peak within a predetermined time period.

In some embodiments, the step of identifying a section of the acceleration measurements corresponding to the elevator motion from the identified peak and trough comprises determining the start time of the elevator motion by searching the acceleration measurements before the earliest one of the identified peak and trough until an acceleration measurement is found where the acceleration is constant and/or the acceleration substantially corresponds to acceleration due to gravity; and determining the end time of the elevator motion by searching the acceleration measurements after the latest one of the identified peak and trough until an acceleration measurement is found where the acceleration is constant and/or the acceleration substantially corresponds to acceleration due to gravity.

In some embodiments, the step of determining an indication of the change in elevation of the user or object during the elevator motion from the identified section of the acceleration measurements comprises double integrating the acceleration measurements between the start time and the end time of the elevator motion.

In further embodiments, the step of processing further comprises applying a filter to the obtained acceleration measurements to suppress high-frequency noise in the measurements prior to identifying peaks and troughs.

In some embodiments, the method further comprises the step of using the indication of the change in elevation of the user or object during the elevator motion to update a previously-determined value for the height of the user or object relative to sea level, a previously-determined value for the height of the user or object relative to the ground or a previously-determined value for the floor of a building or other structure that the user or object is on.

According to a second aspect of the invention, there is provided a computer program product comprising computer-readable code embodied therein, the computer readable code being configured such that, upon execution by a suitable computer or processor, the computer or processor performs the method as described above.

According to a third aspect of the invention, there is provided an apparatus for detecting motion of a user or object in an elevator, the apparatus comprising a processor that is configured to receive measurements of the acceleration experienced by the user or object, process the acceleration measurements to identify a peak and a trough therein that are associated with the start and end of an elevator motion, identify a section of the acceleration measurements corresponding to the elevator motion from the identified peak and trough, and determine an indication of the change in elevation of the user or object during the elevator motion from the identified section of the acceleration measurements.

In some embodiments, the processor is further configured to determine a noise level signal from the acceleration measurements, the noise level signal indicating the level of noise in each of the acceleration measurements; and compare the noise level signal to a noise threshold; and wherein the processor is configured to identify a peak and a trough in the acceleration measurements by processing only those acceleration measurements where the corresponding part of the noise level signal is less than the noise threshold.

In other embodiments, the processor is configured to identify a peak and a trough in the acceleration measurements by comparing the amplitude of each acceleration measurement to a peak threshold and a trough threshold, the peak threshold being higher than the trough threshold; and identifying a candidate peak in the acceleration measurements as a group of consecutive acceleration measurements whose amplitudes exceed the peak threshold and identifying a candidate trough in the acceleration measurements as a group of consecutive acceleration measurements whose amplitudes are below the trough threshold.

In those embodiments, the processor is further configured to identify a peak and a trough in the acceleration measurements by discarding any identified candidate peak or identified candidate trough where the duration of the respective group of acceleration measurements is less than a minimum time threshold.

In further embodiments, the processor is further configured to determine a noise level signal from the acceleration measurements, the noise level signal indicating the level of noise in each of the acceleration measurements; and compare the noise level signal to a noise threshold; and wherein the processor is configured to identify a peak and a trough in the acceleration measurements by discarding any identified candidate peak and identified candidate trough where the corresponding part of the noise level signal exceeds the noise threshold.

In yet further embodiments, the processor is further configured to evaluate the candidate peaks and candidate troughs to identify an elevator motion, with an elevator motion being identified by a candidate peak followed by a candidate trough or a candidate trough followed by a candidate peak.

In other embodiments, the processor is further configured to evaluate the candidate peaks and candidate troughs to identify an elevator motion, with an elevator motion being identified as a candidate peak followed by a candidate trough within a predetermined time period or as a candidate trough followed by a candidate peak within a predetermined time period.

In some embodiments, the processor is configured to identify a section of the acceleration measurements corresponding to the elevator motion from the identified peak and trough by determining the start time of the elevator motion by searching the acceleration measurements before the earliest one of the identified peak and trough until an acceleration measurement is found where the acceleration is constant and/or the acceleration substantially corresponds to acceleration due to gravity; and determining the end time of the elevator motion by searching the acceleration measurements after the latest one of the identified peak and trough until an acceleration measurement is found where the acceleration is constant and/or the acceleration substantially corresponds to acceleration due to gravity.

In some embodiments, the processor is configured to determine an indication of the change in elevation of the user during the elevator motion from the identified section of the acceleration measurements by double integrating the acceleration measurements between the start time and the end time of the elevator motion.

In some embodiments, the processor is further configured to apply a filter to the obtained acceleration measurements to suppress high-frequency noise in the measurements prior to identifying peaks and troughs.

In some embodiments, the processor is further configured to use the indication of the change in elevation of the user or object during the elevator motion to update a previously-determined value for the height of the user or object relative to sea level, a previously-determined value for the height of the user or object relative to the ground or a previously-determined value for the floor of a building or other structure that the user or object is on.

In yet further embodiments, the apparatus further comprises an accelerometer that is configured to be attached to a user or object.

BRIEF DESCRIPTION OF THE DRAWINGS

Embodiments of the invention will now be described, by way of example only, with reference to, and as shown in, the following drawings, in which:

Figure 1 is a block diagram of an apparatus according to an embodiment of the invention;
Figure 2 is a flow chart illustrating a method of processing an accelerometer signal according to an embodiment of the invention;
Figure 3 is a graph showing an exemplary signal from an accelerometer with indications of elevator displacements detected according the method of Figure 2;
Figure 4 is a graph showing another exemplary signal from an accelerometer; and
Figure 5 is a graph illustrating the floor level of the user estimated from the accelerometer signal shown in Figure 3.

DETAILED DESCRIPTION OF THE PREFERRED EMBODIMENTS

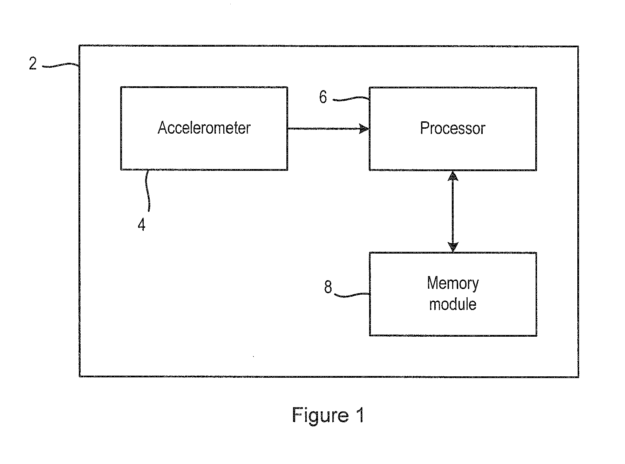

Figure 1 shows an apparatus 2 according to an embodiment of the invention. The apparatus 2 comprises an accelerometer 4 that measures the proper accelerations experienced by the apparatus 2 (i.e. proper in the sense that it includes the effects of gravity) and that outputs a signal representing the measured acceleration to a processor 6. The processor 6 processes the signal from the accelerometer 4 to detect motions characteristic of an elevator and to provide an indication of the elevation of the apparatus 2 from the detected motions. The apparatus 2 further comprises a memory module 8 that can store, for example, the signal from the accelerometer 4, parameters for use in the processing performed by the processor 6, program code for retrieval and execution by the processor 6, and the results of the processing by the processor 6.

The indication of the elevation determined by the processor 6 can be provided in a number of different forms. In particular, the indication of the elevation of the apparatus 2 can indicate the height of the apparatus 2 relative to the ground, the height of the apparatus 2 relative to sea level (more commonly referred to as altitude) and/or the height of the apparatus 2 relative to a previously determined elevation. Preferably, however, the indication of the elevation of the apparatus 2 indicates the floor or level of the building that the apparatus 2 is on (for example, ground floor, first floor, etc.).

The accelerometer 4 is preferably a tri-axial accelerometer that provides measurements of the acceleration in three-dimensions. In this case, the signal output by the accelerometer 4 to the processor 6 can comprise a respective signal for each of the measurement axes of the accelerometer 4. In some embodiments, the accelerometer 4 is a micro-electromechanical system (MEMS) accelerometer, although it will be appreciated that other types of accelerometer 4 can be used. The accelerometer 4 can typically operate at a sampling frequency of 30 Hz or 50 Hz, although it will be appreciated that other sampling frequencies can be used.

Although not illustrated in Figure 1, the apparatus 2 can include some means for communicating the elevation indication determined by the processor 6 to the user or an interested third party. These means can include a display for illustrating the elevation of the user, a speaker for presenting the results of the processing in audible form, and/or transmitter or transceiver circuitry for wirelessly communicating the results of the processing to a remote unit or server.

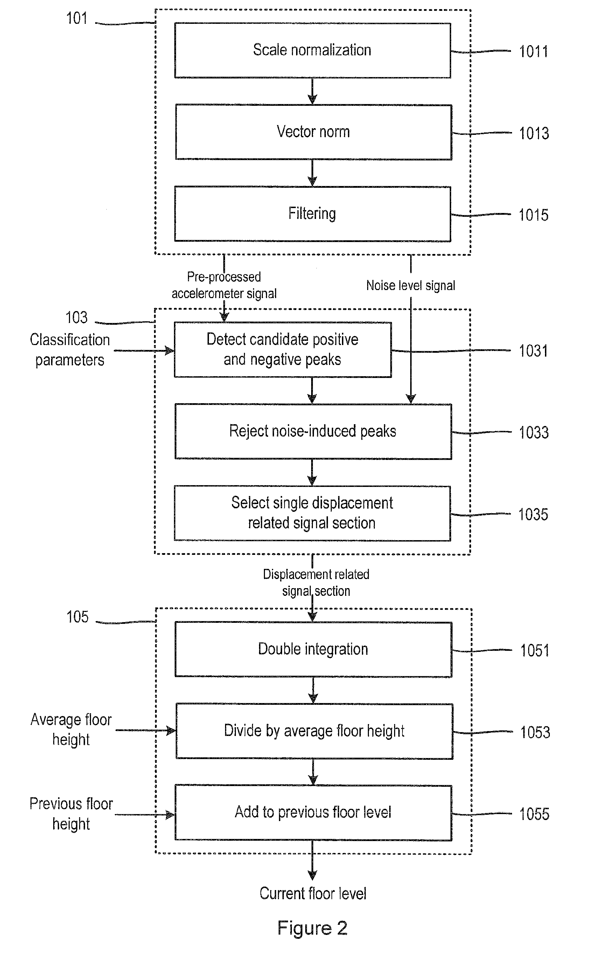

Exemplary steps in the processing performed by the processor 6 to determine the elevation indication are shown in Figure 2. The processing can be generally divided into three phases, a pre-processing step 101 in which noise is removed from the accelerometer signal, a peak detection and classification step 103 in which peaks corresponding to motion of an elevator are detected, and an elevation computation step 105 in which the elevation indication is determined from the detected peaks. In the following, it is assumed that the acceleration signal output by the accelerometer 4 always represents the acceleration in a substantially vertical direction. This assumption holds sufficiently well for most normal motion situations that the user might be in.

In the pre-processing step 101, the signal from the accelerometer 4 undergoes pre-processing in order to remove, or at least reduce, high-frequency noise from the acceleration measurements.

The signal output from the accelerometer 4 may have a different scale than the one needed in subsequent processing steps (for example the integration step 1051). For example, the scale may be in units of some analog-to-digital converter. Therefore, in step 1011, the scale is normalized. To normalize the scale (preferably to units of m/s$^2$), the original accelerometer signal values are divided by a constant, the value of which depends on the 'before' and 'after' scales involved. Furthermore, this step can require the subtraction or addition of a constant in order to normalize the zero-level of the signal. Techniques for implementing this scale normalization will be familiar to those skilled in the art.

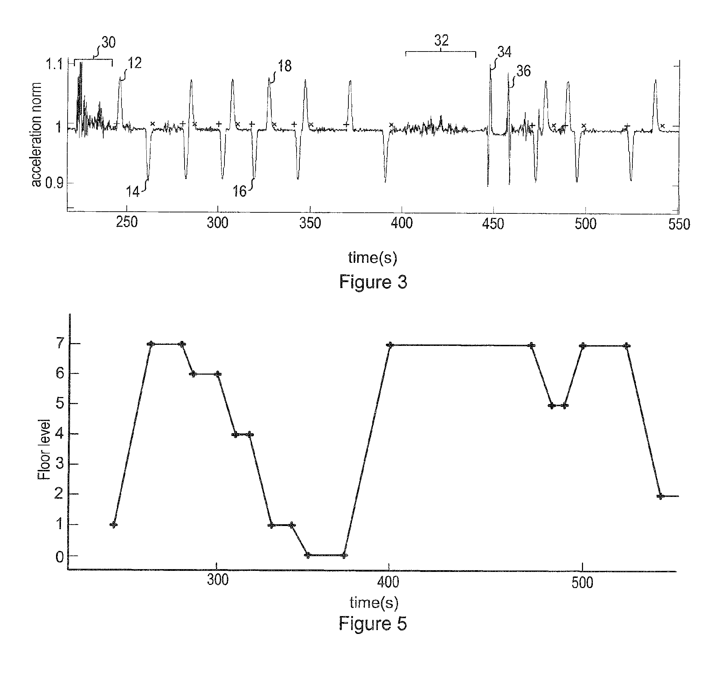

It should be noted that the amplitude scale used in Figure 3 (discussed further below) is using (approximate) gravity i.e. 9.81 m/s$^2$ as the unit, but for the double integration in step 1051 to result in a value with units of meters, the acceleration signal needs to be represented in units of (1) m/s$^2$.

After scale normalization, the scale normalized accelerometer signal is normalized to calculate the vector length (step 1013). The vector length S can be calculated using:

$$S = \sqrt{(X^2 + Y^2 + Z^2)}$$

where X, Y and Z are the components of acceleration along the x-, y- and z-axes of the accelerometer 4 at a particular sampling instant.

After the length (magnitude) of the acceleration vector at each sampling instant has been determined in step 1013, a filter is applied to the time-series of acceleration vector lengths to remove or reduce noise, in particular high-frequency noise (step 1015). The filter applied is preferably a 1-second smoothing filter, although those skilled in the art will be aware of other suitable types of filter that can be used to remove the high-frequency noise components. The high-frequency noise, can comprise frequencies of above around 5 Hz, although other threshold frequencies can be used.

In addition to outputting the filtered acceleration signal, step 1015 also preferably outputs a signal indicating the level of the high-frequency noise, as this signal can be used in the peak detection and classification step 103 to reject noise-related peaks.

The noise level signal can be derived by first subtracting the filtered acceleration signal from the acceleration length signal output by step 1013 to obtain a noise signal. Then, the noise level signal can be derived by either (i) rectifying the noise signal (i.e. taking absolute values) and then performing low-pass filtering, (ii) rectifying the noise signal and for each sample in the noise signal taking the sum of the surrounding samples or (iii) for each sample in the noise signal, calculating the variance in the group of surrounding samples.

The low-pass filtering in option (i) can be performed using the same or similar filter as that used to remove the high-frequency noise from the acceleration length signal output by step 1013 (so for example a 1-second smoothing filter), although those skilled in the art will appreciate that other types of filter can be used. For the selection of surrounding samples in options (ii) and (iii), a window size of 1 second is suitable. Furthermore, instead of variance, other measures of spread can be used, like standard deviation or inter-quartile range. In addition, in principle any operation that results in a measure of the 'energy' of a signal can be used to determine the noise level signal.

After pre-processing, the peaks and troughs in the filtered accelerometer signal that are associated with the motion of an elevator are detected and classified in step 103. As can be seen in Figure 3 (which shows an exemplary signal from an accelerometer 4 that covers a time period in which the apparatus 2 experienced accelerations and decelerations as a result of being in an elevator), the accelerations experienced at the start of an elevator motion are generally identical to the decelerations at the end of the elevator motion - apart from having the opposite direction, but they are very distinct features in the filtered acceleration signal. These accelerations and decelerations appear in the filtered acceleration signal as peaks and troughs (although the order that the peak and trough appears in the accelerometer signal depends on whether the elevator is ascending or descending).

For example, when the elevator is to ascend, the elevator accelerates upwards from rest to a constant velocity. This upwards acceleration is represented in the signal in Figure 3 as a 'positive' peak (e.g. peak 12, and it is 'positive' relative to the acceleration normally experienced by the apparatus 2 due to gravity). As the elevator approaches the required floor, the elevator decelerates until the elevator is again at rest. This deceleration is represented in the signal in Figure 3 as a trough or 'negative' peak (e.g. trough 14, which is 'negative' relative to the acceleration normally experienced by the apparatus 2 due to gravity).

Likewise, when the elevator is to descend, the elevator accelerates downwards from rest to its preset velocity. This downwards acceleration is represented in the signal in Figure 3 as a trough or negative peak (e.g. trough 16, since the net acceleration acting on the apparatus 2 is less than that normally experienced by the apparatus 2 due to gravity). As the elevator approaches the required floor, the elevator decelerates until the elevator is again at rest. This deceleration is represented in the signal in Figure 3 as a peak or 'positive' peak (e.g. peak 18).

Therefore, peak detection and classification is performed in step 103 to detect these successive accelerations and decelerations. In particular, the peak detection and classification aims to detect consecutive peaks and troughs that represent motion of an elevator, with a peak followed by a trough representing an ascent, and a trough followed by a peak representing a descent. Step 103 can achieve this using a number of features typically associated with elevator motion, including duration and amplitude.

In a first step of the peak detection and classification, step 1031, the filtered accelerometer signal is analysed to detect candidate peaks and troughs.

In a preferred embodiment, detection of candidate positive peaks is performed as follows. Firstly, the filtered accelerometer signal is scanned for samples whose amplitudes exceed an amplitude threshold value. The amplitude threshold value for detecting candidate positive peaks will be set to a value that is higher than the acceleration due to gravity (i.e. referring to Figure 3, the positive peak amplitude threshold value will be set at some value greater than 1 as the accelerometer signal has been normalised to g-units, i.e. units of gravity). An exemplary value for the positive peak amplitude threshold value is to set the threshold around 1% or 2% higher than the amplitude of gravity, although it will be appreciated that other values can be used.

The period of time covered by each group of consecutive samples whose magnitudes are above the amplitude threshold value is compared to a minimum time period. Exemplary values for the minimum time period can include 0.5s, 1s or 1.5s, although it will be appreciated that other values can be used. A candidate positive peak is identified as any group of consecutive samples whose magnitudes are above the amplitude threshold value and that cover a period of time greater than the minimum time period. The sample with the largest amplitude within that candidate peak is marked as the central peak time. The use of a minimum time period allows, for example, impacts (which appear as relatively sharp peaks in the accelerometer signal) to be excluded from the subsequent processing steps.

Although exemplary values have been provided for the amplitude threshold value and minimum time period, it will be appreciated that the values for these two parameters should generally be set in combination. So, where a lower amplitude threshold value is used, a longer time period might be selected, and vice versa. It will also be appreciated that optimum values for the amplitude threshold value and minimum time period will depend on the specific type of elevator that the user is in. Optimum values for various types of elevator can be predetermined and stored in a database for use by the apparatus 2 when the apparatus 2 is in a building that contains a known type of elevator (for example with the building being determined on the basis of the last available satellite positioning system measurement).

Although not essential, it is possible to apply a maximum time period to identify the candidate positive peaks, which means that any peak that has a duration longer than the maximum time period will be excluded from the subsequent processing steps. However, it will be appreciated that 'long-duration peaks' are unlikely to occur in the accelerometer signal. Nevertheless, an exemplary value for the maximum time period is 10s, although it will be appreciated that other values can be used.

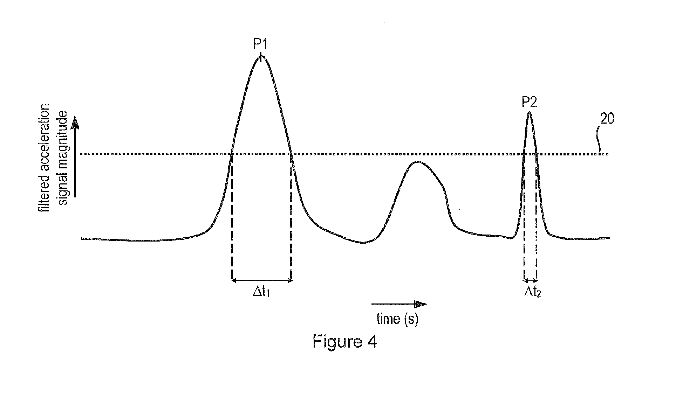

The effect of this processing is illustrated in Figure 4, which shows an exemplary filtered accelerometer signal. The amplitude threshold value is indicated by dotted line 20, and it can be seen that there are two sets of consecutive samples in the filtered accelerometer signal whose amplitudes exceed the amplitude threshold value 20. These possible positive peaks are denoted P1 and P2. The time period covered by the first identified peak, P1, is denoted $\Delta t_1$, and the time period covered by the second identified peak, P2, is denoted $\Delta t_2$. In this example, only the time period covered by the first peak, P1, exceeds the minimum time period and therefore the first peak is considered to be a positive peak that is a candidate for having been caused by the motion of an elevator. However, the second peak, P2, is of insufficient duration (i.e. $\Delta t_2$ is less than the minimum time period) and is therefore not considered to correspond to the motion of an elevator, and is discarded (i.e. it is not considered in the following processing steps). It will also be noted that there is another possible 'peak' between P1 and P2, but this peak has insufficient power (i.e. it does not exceed the amplitude threshold value) and is not detected as a candidate positive peak in this step.

It will be appreciated that the above peak detection can be performed in substantially real time on the filtered accelerometer signal, in which case the signal can be scanned and as soon as a sample is identified whose amplitude exceeds the amplitude threshold value, a timer is started. The scanning of the signal continues and the timer runs until a sample is found that has an amplitude value below the amplitude threshold value. The time that has elapsed between the 'threshold crossings' is then compared to the minimum time period for peak duration. If the time difference is sufficiently large (i.e. the elapsed time exceeds the minimum time period), a candidate peak is detected and the sample with the largest value within that time range is marked as the central peak time.

It will be noted that candidate troughs (negative peaks) in the accelerometer signal can be detected in a similar fashion by using a negative peak/trough amplitude threshold value that is set below the value of acceleration due to gravity (for example 1% or 2% below the value for acceleration due to gravity), and identifying candidate negative peaks/troughs as those groups of consecutive samples whose amplitudes are below that threshold value and that cover a time period greater than the minimum time period. The detection of candidate peaks and troughs is preferably performed in parallel.

In the next step of the peak detection and classification, step 1033, the candidate peaks and troughs identified in step 1031 are evaluated to determine if any result from noise in the accelerometer signal. Any candidate peak or trough determined to result from noise in the accelerometer signal is discarded and not considered in subsequent processing steps. In particular, step 1033 takes the output of step 1031 and uses the noise level signal from the filtering step (step 1015) to determine which, if any, of the detected peaks and troughs have been induced into the signal by high frequency noise.

As filtering step 1015 is basically a moving average operation, high-frequency noise can be eliminated provided that it does not affect the average signal level. Thus, filtering step 1015 is reasonably effective where the noise components are of short duration and low amplitude (so they have limited effect on the average) and are evenly spread into positive and negative deviations (so they cancel out). However, it has been found that prolonged, high-energy, high-frequency noise can effectively induce a low-frequency distortion into the accelerometer signal. Such noise might be caused by, for example, the user of the apparatus 2 jumping up and down.

So, if the noise level signal (i.e. representing the energy of the noise) determined in step 1015 is high, then this can indicate that the noise has affected the accelerometer signal even into lower frequencies, and an associated candidate peak or trough in the signal may relate to noise rather than accelerations that have actually been caused by an elevator.

Therefore, in step 1033, for each of the candidate peaks and troughs (preferably for each sample or samples in a detected peak or trough), the noise level signal is evaluated to determine whether the noise level is high for any of the samples forming that peak or trough. This evaluation can comprise comparing the noise level signal to a threshold value, and if the noise level signal exceeds the threshold value at the same time that a peak or trough is detected in step 1031, that peak or trough can be discarded as being 'noise-induced'. The noise level threshold value depends on the details of the filtering and the noise level signal calculation (step 1015). Where the noise level signal is determined using option (i) - rectifying the noise signal (i.e. taking absolute values) and then performing low-pass filtering - the noise level threshold can be set to 0.8 ms$^{-2}$, although it will be appreciated that other values can be used.

After rejection of any noise-induced peaks or troughs in step 1033, the remaining candidate peaks and troughs are evaluated to determine which correspond to a single elevator displacement (step 1035). As indicated above, an elevator motion comprises a sequential pair of oppositely signed peaks (either a negative peak/trough followed by a positive peak for a descent, or the other way round for an ascent).

To qualify as a valid pair, an upper limit is placed on the permitted time duration between consecutive peaks and troughs. The upper limit can be set according to the maximum expected elevator displacement duration. If no subsequent positive/negative peak is detected within the maximum permitted time duration from an initial negative/positive peak, then it can be assumed that the initial peak was not as a result of elevator motion. The analysis can then be repeated for the next detected peak or trough.

Once a valid peak and trough pair has been identified, the duration of the elevator motion is determined. This can be achieved by determining the start time of the motion and the end time of the motion (it will be appreciated that the 'time' can be indicated by the appropriate samples in the signal from the accelerometer 4). Using the central peak times of the peak and trough, the starting time can be determined by searching backwards from the earliest central peak time and the end time can be determined by searching forwards from the latest central peak time until either, or both, (i) the signal no longer increases or decreases in amplitude (whichever is applicable) or (ii) the signal reaches a value that is sufficiently close (i.e. within a threshold amount) to the magnitude of acceleration due to gravity.

The output of step 1035 comprises sections of the filtered accelerometer signal corresponding to detected pairs of positive and negative peaks, as defined by the determined start and end times of the elevator motion.

An exemplary result of the processing in step 103 is shown in Figure 3, with each '+' indicating the start of an elevator displacement, and each 'x' indicating the end of an elevator displacement. It can be seen that the processing has determined that several parts of the accelerometer signal are not candidate peaks (denoted 30, 32, 34 and 36 in Figure 3). This may be because the signal did not have sufficient amplitude (for example 32), there was too much noise (for example 30, which resulted from a series of impacts), or the group of samples whose amplitudes exceeded the amplitude threshold value covered an insufficient amount of time (for example 34 and 36, which resulted from the user bending down and standing upright again).

The sections identified in step 103 are passed to step 105 in which the displacement due to detected elevator motion is determined.

Firstly, in step 1051, a double integration with respect to time is performed on each accelerometer signal section to determine the vertical distance travelled during that particular motion. The start and end times of the section (i.e. the start time of the first peak/trough and the end time of the second trough/peak) provide the lower and upper bounds for the integration respectively.

Optionally, prior to step 1051, the 'flat' parts of each accelerometer signal section can be smoothed to improve the accuracy of the double integration. It is also possible to carry out a (further) signal conditioning step between the two integration operations.

Then, optionally, the determined vertical distance can be converted into a measure of the number of floors traversed up or down during the motion by dividing the determined vertical distance by the or an average floor height (step 1053), and rounding the result to the nearest integer. The average floor height can be predetermined, and stored in the memory module 8. An exemplary value for the average floor height is 4 metres, but it will be appreciated that this value can vary significantly depending on the building, building type (e.g. residential or commercial), the prevailing building regulations, etc. In some embodiments, average floor height values for different building or structure types can be stored in the memory module 8, and an appropriate value selected by the apparatus 2 depending on the building or structure that the user is in (which could be determined based on the most recent measurement obtained by the satellite positioning system.

In step 1055, the number of floors traversed during a particular motion is added (or subtracted, as appropriate) from a previous indication of the floor level of the user to give the current floor level. So, for example if it had previously been determined that the user was on the second floor and the apparatus 2 determines that the user has gone up three floors in an elevator, step 1055 will output the user's position as being on the fifth floor. Figure 5 shows an exemplary output of step 105 for the accelerometer signal shown in Figure 3.

In some implementations of the invention, the apparatus 2 and associated method can be implemented in a device, such as a mobile telephone, smart phone or PDA, that typically already include an accelerometer and the required processor.

It will also be appreciated that the apparatus 2 can be implemented in any system where it is useful to determine the elevation of a user in a building or other indoor environment or structure, such as a system for tracking the location of particular patients prone to wandering in a hospital (in which case the elevation determined according to the invention can be communicated to a monitoring station to enable a nurse or other healthcare professional to locate the patient and intervene to return the patient to the correct location), or a system for providing general indoor location tracking that complements an outdoor location tracking system, such as GPS. Furthermore, it will be appreciated that the apparatus 2 can be used to provide an indication of the elevation of an object (including an elevator itself) associated with the apparatus 2, rather than a user.

In the case where the apparatus 2 is used to track patients in a hospital (and in similar implementations), the apparatus 2 can be adapted to be attached to a part of the body of the user, such as the waist, trunk, thorax, pelvis or sternum, and can comprise a suitable arrangement (for example a belt or strap) for attaching the apparatus 2 to that part of the body.

Finally, it will be appreciated that in some embodiments of the invention, the accelerometer 4 can be provided in a separate device to the device that comprises the processor 6. In this case, the accelerometer 4 can be attached to the user or object being tracked, and the output of the accelerometer 4 can be transmitted to the processor 6 (using either a wired or wireless connection) for subsequent processing.

There is therefore provided an improved method and apparatus for detecting the motion of the user in an elevator and for determining the elevation of the user from that motion, for example in terms of the floor or level of a building that the user is on.

While the invention has been illustrated and described in detail in the drawings and foregoing description, such illustration and description are to be considered illustrative or exemplary and not restrictive; the invention is not limited to the disclosed embodiments.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A method for detecting the motion of a user or object in an elevator, the method comprising:

    measuring the acceleration experienced by the user or object to obtain a series of acceleration measurements;
    processing the series of acceleration measurements to identify a peak and a trough therein that are associated with the start and end of an elevator motion;
    identifying a section of the acceleration measurements corresponding to the elevator motion from the identified peak and trough; and
    determining an indication of the change in elevation of the user or object during the elevator motion from the identified section of the acceleration measurements.

2. A method as claimed in claim 1, further comprising the steps of:

- determining a noise level signal from the series of acceleration measurements, the noise level signal indicating the level of noise in each of the acceleration measurements; and
- comparing the noise level signal to a noise threshold;

and wherein the step of processing the acceleration measurements comprises:

processing only those acceleration measurements where the corresponding part of the noise level signal is less than the noise threshold.

3. A method as claimed in claim 1, wherein the step of processing comprises:

comparing the amplitude of each acceleration measurement to a peak threshold and a trough threshold, the peak threshold being higher than the trough threshold; identifying a candidate peak in the acceleration measurements as a group of consecutive acceleration measurements whose amplitudes exceed the peak threshold and identifying a candidate trough in the acceleration measurements as a group of consecutive acceleration measurements whose amplitudes are below the trough threshold.

4. A method as claimed in claim 3, wherein the step of processing further comprises:

discarding any identified candidate peak or identified candidate trough where the duration of the respective group of acceleration measurements is less than a minimum time threshold.

5. A method as claimed in claim 3 or 4, the method further comprising the steps of:

determining a noise level signal from the series of acceleration measurements, the noise level signal indicating the level of noise in each of the acceleration measurements; and comparing the noise level signal to a noise threshold; and wherein the step of processing the acceleration measurements further comprises:

discarding any identified candidate peak and identified candidate trough where the corresponding part of the noise level signal exceeds the noise threshold.

6. A method as claimed in any preceding claim, wherein the step of identifying a section of the acceleration measurements corresponding to the elevator motion from the identified peak and trough comprises:

determining the start time of the elevator motion by searching the acceleration measurements before the earliest one of the identified peak and trough until an acceleration measurement is found where the acceleration is constant and/or the acceleration substantially corresponds to acceleration due to gravity; and determining the end time of the elevator motion by searching the acceleration measurements after the latest one of the identified peak and trough until an acceleration measurement is found where the acceleration is constant and/or the acceleration substantially corresponds to acceleration due to gravity.

7. A method as claimed in any preceding claim, wherein the step of processing further comprises:

applying a filter to the obtained acceleration measurements to suppress high-frequency noise in the measurements prior to identifying peaks and troughs.

8. A computer program product comprising computer-readable code embodied therein, the computer readable code being configured such that, upon execution by a suitable computer or processor, the computer or processor performs the method as claimed in any of claims 1 to 7.

9. An apparatus for detecting motion of a user or object in an elevator, the apparatus comprising:

a processor that is configured to receive measurements of the acceleration experienced by the user or object, process the acceleration measurements to identify a peak and a trough therein that are associated with the start and end of an elevator motion, identify a section of the acceleration measurements corresponding to the elevator motion from the identified peak and trough, and determine an indication of the change in elevation of the user or object during the elevator motion from the identified section of the acceleration measurements.

10. An apparatus as claimed in claim 9, wherein the processor is further configured to determine a noise level signal from the acceleration measurements, the noise level signal indicating the level of noise in each of the acceleration measurements; and

compare the noise level signal to a noise threshold; and wherein the processor is configured to process only those acceleration measurements where the corresponding part of the noise level signal is less than the noise threshold.

11. An apparatus as claimed in claim 9, wherein the processor is configured to identify a peak and a trough in the acceleration measurements by

comparing the amplitude of each acceleration measurement to a peak threshold and a trough threshold, the peak threshold being higher than the trough threshold; and

identifying a candidate peak in the acceleration measurements as a group of consecutive acceleration measurements whose amplitudes exceed the peak threshold and identifying a candidate trough in the acceleration measurements as a group of consecutive acceleration measurements whose amplitudes are below the trough threshold.

12. An apparatus as claimed in claim 11, wherein the processor is further configured to identify a peak and a trough in the acceleration measurements by discarding any identified candidate peak or identified candidate trough where the duration of the respective group of acceleration measurements is less than a minimum time threshold.

13. An apparatus as claimed in claim 11 or 12, wherein the processor is further configured to:

determine a noise level signal from the acceleration measurements, the noise level signal indicating the level of noise in each of the acceleration measurements; and compare the noise level signal to a noise threshold;

and wherein the processor is configured to identify a peak and a trough in the acceleration measurements by discarding any identified candidate peak and identified candidate trough where the corresponding part of the noise level signal exceeds the noise threshold.

14. An apparatus as claimed in any of claims 9 to 13, wherein the processor is configured to identify a section of the acceleration measurements corresponding to the elevator motion from the identified peak and trough by:

determining the start time of the elevator motion by searching the acceleration measurements before the earliest one of the identified peak and trough until an acceleration measurement is found where the acceleration is constant and/or the acceleration substantially corresponds to acceleration due to gravity; and

determining the end time of the elevator motion by searching the acceleration measurements after the latest one of the identified peak and trough until an acceleration measurement is found where the acceleration is constant and/or the acceleration substantially corresponds to acceleration due to gravity.

15. An apparatus as claimed in any of claims 9 to 14, wherein the processor is further configured to apply a filter to the obtained acceleration measurements to suppress high-frequency noise in the measurements prior to identifying peaks and troughs.

**Patentansprüche**

1. Verfahren zur Erkennung der Bewegung eines Benutzers oder Objekts in einem Aufzug, wobei das Verfahren Folgendes umfasst:

Messen der durch den Benutzer oder das Objekt erfahrenen Beschleunigung, um eine Reihe von Beschleunigungsmessungen zu erlangen; Verarbeiten der Reihe von Beschleunigungsmessungen, um darin einen Spitzenwert und einen Tiefstwert zu identifizieren, die zu dem Beginn und dem Ende der Aufzugbewegung gehören; Identifizieren eines mit der Aufzugbewegung übereinstimmenden Abschnitts der Beschleunigungsmessungen anhand des identifizierten Spitzenwerts und Tiefstwerts; und Ermitteln einer Angabe bezüglich der Änderung der Elevation des Benutzers oder Objekts während der Aufzugbewegung anhand des identifizierten Abschnitts der Beschleunigungsmessungen.

2. Verfahren nach Anspruch 1, das weiterhin die folgenden Schritte umfasst:

- Ermitteln eines Rauschpegelsignals anhand der Reihe von Beschleunigungsmessungen, wobei das Rauschpegelsignal den Rauschpegel in jeder der Beschleunigungsmessungen angibt; und
- Vergleichen des Rauschpegelsignals mit einem Rauschschwellenwert;

und wobei der Schritt des Verarbeitens der Beschleunigungsmessungen Folgendes umfasst:

Verarbeiten nur derjenigen Beschleunigungsmessungen, bei denen der entsprechende Teil des Rauschpegelsignals kleiner ist als der Rauschschwellenwert.

3. Verfahren nach Anspruch 1, wobei der Schritt des Verarbeitens Folgendes umfasst:

Vergleichen der Amplitude jeder Beschleunigungsmessung mit einem Spitzenwert-Schwellenwert und Tiefstwert-Schwellenwert, wobei der Spitzenwert-Schwellenwert höher ist als der Tiefstwert-Schwellenwert;
Identifizieren eines in Frage kommenden Spitzenwerts in den Beschleunigungsmessungen als eine Gruppe von aufeinanderfolgenden Beschleunigungsmessungen, deren Amplituden den Spitzenwert-Schwellenwert überschreiten, und Identifizieren eines in Frage kommenden Tiefstwerts in den Beschleunigungsmessungen als eine Gruppe von aufeinanderfolgenden Beschleunigungsmessungen, deren Amplituden unter dem Tiefstwert-Schwellenwert liegen.

4. Verfahren nach Anspruch 3, wobei der Schritt des Verarbeitens weiterhin Folgendes umfasst:

Aussondern jedes identifizierten in Frage kommenden Spitzenwerts oder identifizierten in Frage kommenden Tiefstwerts, wo die Dauer der jeweiligen Gruppe von Beschleunigungsmessungen weniger als einen Mindestzeit-Schwellenwert beträgt.

5. Verfahren nach Anspruch 3 oder 4, wobei das Verfahren weiterhin die Folgenden Schritte umfasst:

Ermitteln eines Rauschpegelsignals anhand der Reihe von Beschleunigungsmessungen, wobei das Rauschpegelsignal den Rauschpegel in jeder der Beschleunigungsmessungen angibt; und
Vergleichen des Rauschpegelsignals mit einem Rauschschwellenwert;
und wobei der Schritt des Verarbeitens der Beschleunigungsmessungen weiterhin Folgendes umfasst:

Aussondern jedes identifizierten in Frage kommenden Spitzenwerts und in Frage kommenden Tiefstwerts, wo der entsprechende Teil des Rauschpegelsignals den Rauschschwellenwert überschreitet.

6. Verfahren nach einem der vorhergehenden Ansprüche, wobei der Schritt des Identifizierens eines mit der Aufzugbewegung übereinstimmenden Abschnitts der Beschleunigungsmessungen anhand des identifizierten Spitzenwerts und Tiefstwerts Folgendes umfasst:

Ermitteln des Anfangszeitpunkts der Aufzugbewegung durch Suchen der Beschleunigungsmessungen vor dem frühesten identifizierten Spitzenwert und Tiefstwert, bis eine Beschleunigungsmessung gefunden ist, bei der die Beschleunigung konstant ist und/oder die Beschleunigung im Wesentlichen der Beschleunigung aufgrund der Schwerkraft entspricht; und
Ermitteln des Endzeitpunkts der Aufzugbewegung durch Suchen der Beschleunigungsmessungen nach dem letzten identifizierten Spitzenwert und Tiefstwert, bis eine Beschleunigungsmessung gefunden ist, bei der die Beschleunigung konstant ist und/oder die Beschleunigung im Wesentlichen der Beschleunigung aufgrund der Schwerkraft entspricht.

7. Verfahren nach einem der vorhergehenden Ansprüche, wobei der Schritt des Verarbeitens Folgendes umfasst:

Anwenden eines Filters auf die erlangten Beschleunigungsmessungen, um vor dem Identifizieren von Spitzenwerten und Tiefstwerten hochfrequentes Rauschen in den Messungen zu unterdrücken.

8. Computerprogrammprodukt mit einem darin verkörperten computerlesbarem Code, wobei der computerlesbare Code derartig konfiguriert ist, dass er, wenn er durch einen geeigneten Computer oder Prozessor ausgeführt wird, den Computer oder Prozessor veranlasst, das Verfahren nach einem der Ansprüche 1 bis 7 durchzuführen.

9. Gerät zum Erkennen von Bewegung eines Benutzers oder Objekts in einem Aufzug, wobei das Gerät Folgendes umfasst:

einen Prozessor, der konfiguriert ist, um Messungen der durch den Benutzer oder das Objekt erfahrenen Beschleunigung zu empfangen; die Beschleunigungsmessungen zu verarbeiten, um darin einen Spitzenwert und einen Tiefstwert zu identifizieren, die zu dem Beginn und dem Ende einer Aufzugbewegung gehören; einen mit der Aufzugbewegung übereinstimmenden Abschnitt der Beschleunigungsmessungen anhand des identifizierten Spitzenwerts und Tiefstwerts zu identifizieren; und eine Angabe bezüglich der Änderung der Elevation des Benutzers oder Objekts während der Aufzugbewegung anhand des identifizierten Abschnitts der Beschleunigungsmessungen zu ermitteln.

10. Gerät nach Anspruch 9, wobei der Prozessor weiterhin für Folgendes konfiguriert ist:

Ermitteln eines Rauschpegelsignals anhand der Beschleunigungsmessungen, wobei das Rauschpegelsignal den Rauschpegel in jeder der Beschleunigungsmessungen angibt; und Vergleichen des Rauschpegelsignals mit einem Rauschschwellenwert;
und wobei der Prozessor konfiguriert ist, um nur diejenigen Beschleunigungsmessungen zu verarbeiten, bei denen der entsprechende Teil des Rauschpegelsignals kleiner ist als der Rauschschwellenwert.

**11.** Gerät nach Anspruch 9, wobei der Prozessor konfiguriert ist, um einen Spitzenwert und einen Tiefstwert in den Beschleunigungsmessungen zu identifizieren durch
Vergleichen der Amplitude jeder Beschleunigungsmessung mit einem Spitzenwert-Schwellenwert und Tiefstwert-Schwellenwert, wobei der Spitzenwert-Schwellenwert höher ist als der Tiefstwert-Schwellenwert; und
Identifizieren eines in Frage kommenden Spitzenwerts in den Beschleunigungsmessungen als eine Gruppe von aufeinanderfolgenden Beschleunigungsmessungen, deren Amplituden den Spitzenwert-Schwellenwert überschreiten, und Identifizieren eines in Frage kommenden Tiefstwerts in den Beschleunigungsmessungen als eine Gruppe von aufeinanderfolgenden Beschleunigungsmessungen, deren Amplituden unter dem Tiefstwert-Schwellenwert liegen.

**12.** Gerät nach Anspruch 11, wobei der Prozessor weiterhin konfiguriert ist, um einen Spitzenwert und einen Tiefstwert in den Beschleunigungsmessungen zu identifizieren, indem er jeden identifizierten in Frage kommenden Spitzenwert oder identifizierten in Frage kommenden Tiefstwert aussondert, wo die Dauer der jeweiligen Gruppe von Beschleunigungsmessungen weniger als einen Mindestzeit-Schwellenwert beträgt.

**13.** Gerät nach Anspruch 11 oder 12, wobei der Prozessor weiterhin für Folgendes konfiguriert ist:

Ermitteln eines Rauschpegelsignals anhand der Beschleunigungsmessungen, wobei das Rauschpegelsignal den Rauschpegel in jeder der Beschleunigungsmessungen angibt; und Vergleichen des Rauschpegelsignals mit einem Rauschschwellenwert;
und wobei der Prozessor konfiguriert ist, um einen Spitzenwert und einen Tiefstwert in den Beschleunigungsmessungen zu identifizieren, indem er jeden identifizierten in Frage kommenden Spitzenwert und identifizierten in Frage kommenden Tiefstwert aussondert, wo der entsprechende Teil des Rauschpegelsignals den Rauschschwellenwert überschreitet.

**14.** Gerät nach einem der Ansprüche 9 bis 13, wobei der Prozessor konfiguriert ist, um einen mit der Aufzugbewegung übereinstimmenden Abschnitt der Beschleunigungsmessungen anhand des identifizierten Spitzenwerts und Tiefstwerts zu identifizieren durch:

Ermitteln des Anfangszeitpunkts der Aufzugbewegung durch Suchen der Beschleunigungsmessungen vor dem frühesten identifizierten Spitzenwert und Tiefstwert, bis eine Beschleunigungsmessung gefunden ist, bei der die Beschleunigung konstant ist und/oder die Beschleunigung im Wesentlichen der Beschleunigung aufgrund der Schwerkraft entspricht; und
Ermitteln des Endzeitpunkts der Aufzugbewegung durch Suchen der Beschleunigungsmessungen nach dem letzten identifizierten Spitzenwert und Tiefstwert, bis eine Beschleunigungsmessung gefunden ist, bei der die Beschleunigung konstant ist und/oder die Beschleunigung im Wesentlichen der Beschleunigung aufgrund der Schwerkraft entspricht.

**15.** Gerät nach einem der Ansprüche 9 bis 14, wobei der Prozessor weiterhin konfiguriert ist, um einen Filter auf die erlangten Beschleunigungsmessungen anzuwenden, um vor dem Identifizieren der Spitzenwerte und Tiefstwerte hochfrequentes Rauschen in den Messungen zu unterdrücken.

**Revendications**

**1.** Procédé de détection du mouvement d'un utilisateur ou d'un objet dans un ascenseur, le procédé comprenant :

la mesure de l'accélération subie par l'utilisateur ou l'objet pour obtenir une série de mesures d'accélération ;
le traitement de la série de mesures d'accélération pour identifier une crête et un creux parmi celles-ci qui sont associés au début et à la fin d'un mouvement d'ascenseur ;
l'identification d'une section des mesures d'accélération correspondant au mouvement d'ascenseur à partir de la crête identifiée et du creux identifié ; et
la détermination d'une indication du changement de l'élévation de l'utilisateur ou de l'objet au cours du mouvement d'ascenseur à partir de la section identifiée des mesures d'accélération.

**2.** Procédé selon la revendication 1, comprenant en outre les étapes de :

- la détermination d'un signal de niveau de bruit à partir de la série de mesures d'accélération, le signal de niveau de bruit indiquant le niveau de bruit dans chacune des mesures d'accélération ; et
- la comparaison du signal de niveau de bruit à un seuil de bruit ;

et dans lequel l'étape du traitement des mesures d'accélération comprend :

le traitement uniquement des mesures d'accélération dans lesquelles la partie correspondante du signal de niveau de bruit est inférieure au seuil de bruit.

**3.** Procédé selon la revendication 1, dans lequel l'étape du traitement comprend :

la comparaison de l'amplitude de chaque mesure d'accélération à un seuil de crête et à un seuil de creux, le seuil de crête étant plus haut que le seuil de creux ;
l'identification d'une crête candidate dans les mesures d'accélération sous la forme d'un groupe de mesures d'accélération consécutives dont les amplitudes dépassent le seuil de crête et l'identification d'un creux candidat dans les mesures d'accélération sous la forme d'un groupe de mesures d'accélération consécutives dont les amplitudes sont au-dessous du seuil de creux.

**4.** Procédé selon la revendication 3, dans lequel l'étape du traitement comprend en outre :

le rejet de la crête candidate identifiée ou du creux candidat identifié lorsque la durée du groupe respectif de mesures d'accélération est inférieure à un seuil de temps minimal.

**5.** Procédé selon la revendication 3 ou 4, le procédé comprenant en outre les étapes de :

la détermination d'un signal de niveau de bruit à partir de la série de mesures d'accélération, le signal de niveau de bruit indiquant le niveau de bruit dans chacune des mesures d'accélération ; et
la comparaison du signal de niveau de bruit à un seuil de bruit ;
et dans lequel l'étape du traitement des mesures d'accélération comprend en outre :

le rejet de toute crête candidate identifiée et de tout creux candidat identifié lorsque la partie correspondante du signal de niveau de bruit dépasse le seuil de bruit.

**6.** Procédé selon l'une quelconque des revendications précédentes, dans lequel l'étape de l'identification d'une section des mesures d'accélération correspondant au mouvement d'ascenseur à partir de la crête identifiée et du creux identifié comprend :

la détermination du temps de début du mouvement d'ascenseur en recherchant les mesures d'accélération avant le plus précoce de la crête identifiée et du creux identifié jusqu'à ce qu'une mesure d'accélération soit trouvée telle que l'accélération soit constante et/ou l'accélération corresponde sensiblement à l'accélération due à la gravité ; et
la détermination du temps de fin du mouvement d'ascenseur en recherchant les mesures d'accélération après le plus tardif de la crête identifiée et du creux identifié jusqu'à ce qu'une mesure d'accélération soit trouvée telle que l'accélération soit constante et/ou l'accélération corresponde sensiblement à l'accélération due à la gravité.

**7.** Procédé selon l'une quelconque des revendications précédentes, dans lequel l'étape du traitement comprend en outre :

l'application d'un filtre aux mesures d'accélération obtenues pour supprimer tout bruit de haute fréquence dans les mesures avant l'identification des crêtes et des creux.

**8.** Produit de programme informatique comprenant un code lisible par ordinateur incorporé à celui-ci, le code lisible par ordinateur étant configuré de sorte que, lorsqu'il est exécuté par un ordinateur ou un processeur approprié, l'ordinateur ou le processeur effectue le procédé selon l'une quelconque des revendications 1 à 7.

**9.** Appareil destiné à détecter un mouvement d'un utilisateur ou d'un objet dans un ascenseur, l'appareil comprenant :

un processeur qui est configuré pour effectuer la réception de mesures de l'accélération subie par l'utilisateur ou l'objet, le traitement des mesures d'accélération pour identifier une crête et un creux parmi celles-ci qui sont associés au début et à la fin d'un mouvement d'ascenseur, l'identification d'une section des mesures d'accélération correspondant au mouvement d'ascenseur à partir de la crête identifiée et du creux identifié, et la détermination d'une indication du changement de l'élévation de l'utilisateur ou de l'objet au cours du mouvement d'ascenseur à partir de la section identifiée des mesures d'accélération.

**10.** Appareil selon la revendication 9, dans lequel le processeur est en outre configuré pour effectuer :

la détermination d'un signal de niveau de bruit à partir des mesures d'accélération, le signal de niveau de bruit indiquant le niveau de bruit dans chacune des mesures d'accélération ; et la comparaison du signal de niveau de bruit à un seuil de bruit ; et dans lequel le processeur est configuré pour effectuer le traitement uniquement des mesures d'accélération dans lesquelles la partie correspondante du signal de niveau de bruit est inférieure au seuil de bruit.

**11.** Appareil selon la revendication 9, dans lequel le processeur est configuré pour effectuer l'identification d'une crête et d'un creux dans les mesures d'accélération par :

la comparaison de l'amplitude de chaque mesure d'accélération à un seuil de crête et à un seuil de creux, le seuil de crête étant plus haut que le seuil de creux ; et l'identification d'une crête candidate dans les mesures d'accélération sous la forme d'un groupe de mesures d'accélération consécutives dont les amplitudes dépassent le seuil de crête et l'identification d'un creux candidat dans les mesures d'accélération sous la forme d'un groupe de mesures d'accélération consécutives dont les amplitudes sont au-dessous du seuil de creux.

**12.** Appareil selon la revendication 11, dans lequel le processeur est en outre configuré pour effectuer l'identification d'une crête et d'un creux dans les mesures d'accélération par le rejet de toute crête candidate identifiée ou de tout creux candidat identifié lorsque la durée du groupe respectif de mesures d'accélération est inférieure à un seuil de temps minimal.

**13.** Appareil selon la revendication 11 ou 12, dans lequel le processeur est en outre configuré pour effectuer :

la détermination d'un signal de niveau de bruit à partir des mesures d'accélération, le signal de niveau de bruit indiquant le niveau de bruit dans chacune des mesures d'accélération; et la comparaison du signal de niveau de bruit à un seuil de bruit ; et dans lequel le processeur est configuré pour identifier une crête et un creux dans les mesures d'accélération par le rejet de toute crête candidate identifiée et de tout creux candidat identifié lorsque la partie correspondante du signal de niveau de bruit dépasse le seuil de bruit.

**14.** Appareil selon l'une quelconque des revendications 9 à 13, dans lequel le processeur est configuré pour effectuer l'identification d'une section des mesures d'accélération correspondant au mouvement d'ascenseur à partir de la crête identifiée et du creux identifié par :

la détermination du temps de début du mouvement d'ascenseur en recherchant les mesures d'accélération avant le plus précoce de la crête identifiée et du creux identifié jusqu'à ce qu'une mesure d'accélération soit trouvée telle que l'accélération soit constante et/ou l'accélération corresponde sensiblement à l'accélération due à la gravité ; et la détermination du temps de fin du mouvement d'ascenseur en recherchant les mesures d'accélération après le plus tardif de la crête identifiée et du creux identifié jusqu'à ce qu'une mesure d'accélération soit trouvée telle que l'accélération soit constante et/ou l'accélération corresponde sensiblement à l'accélération due à la gravité.

**15.** Appareil selon l'une quelconque des revendications 9 à 14, dans lequel le processeur est en outre configuré pour effectuer l'application d'un filtre aux mesures d'accélération obtenues pour supprimer tout bruit de haute fréquence dans les mesures avant l'identification des crêtes et des creux.

2

Accelerometer

6 Processor

4

8 Memory
module

Figure 1

| | |
|---|---|
| **101** | |

```
┌─────────────────────────────────┐
│  ┌───────────────────────────┐  │
│  │    Scale normalization    │──┼── 1011
│  └───────────────────────────┘  │
│               │                 │
│               ▼                 │
│  ┌───────────────────────────┐  │
│  │        Vector norm        │──┼── 1013
│  └───────────────────────────┘  │
│               │                 │
│               ▼                 │
│  ┌───────────────────────────┐  │
│  │         Filtering         │──┼── 1015
│  └───────────────────────────┘  │
└─────────────────────────────────┘
```

Pre-processed accelerometer signal          Noise level signal

**103**

Classification parameters →

```
┌─────────────────────────────────┐
│  ┌───────────────────────────┐  │
│  │  Detect candidate positive│──┼── 1031
│  │    and negative peaks     │  │
│  └───────────────────────────┘  │
│               │                 │
│               ▼                 │
│  ┌───────────────────────────┐  │
│  │  Reject noise-induced peaks│─┼── 1033
│  └───────────────────────────┘  │
│               │                 │
│               ▼                 │
│  ┌───────────────────────────┐  │
│  │  Select single displacement│─┼── 1035
│  │    related signal section │  │
│  └───────────────────────────┘  │
└─────────────────────────────────┘
```

Displacement related signal section

**105**

Average floor height →

Previous floor height →

```
┌─────────────────────────────────┐
│  ┌───────────────────────────┐  │
│  │     Double integration    │──┼── 1051
│  └───────────────────────────┘  │
│               │                 │
│               ▼                 │
│  ┌───────────────────────────┐  │
│  │ Divide by average floor height│─ 1053
│  └───────────────────────────┘  │
│               │                 │
│               ▼                 │
│  ┌───────────────────────────┐  │
│  │   Add to previous floor level│─ 1055
│  └───────────────────────────┘  │
└─────────────────────────────────┘
```

Current floor level

Figure 2

Figure 3

Figure 5

EP 2 748 093 B1

Figure 4

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009013114 A1